# EUROPEAN PATENT APPLICATION

(11) **EP 2 352 070 A1**
(43) Date of publication of application: **03.08.2011**
(21) Application number: 09818821.2
(22) Date of filing: 04.09.2009
(51) Int. Cl.: G05B 19/00, H04L 9/32, H04L 12/28, E05B 49/00

(54) **PROGRAMMABLE ELECTRONIC ACCESS CONTROL SYSTEM WITH "ON LINE" UPDATING WITHOUT CABLES**

(30) Priority: 06.10.2008 ES 200802901
(71) Applicant: Talleres De Escoriaza, S.A., 20305 Irun (Guipuzcoa) (ES)
(72) Inventor: VILA ERRANDONEA, Julia, 20302 Irun (Guipuzcoa) (ES); JAUREGUI TORRECILLA, Eduardo, 20170 Usurbil (Guipuzcoa) (ES)
(74) Representative: Boden, Keith McMurray
(86) International application number: PCT/ES2009/000439
(87) International publication number: WO 2010/040867

(57) **Abstract**

Programmable electronic access control system with 'on line' updating without cables, having at least one communication centre or node (1), which is connected to the central control unit (2) via a standard industrial communication network (3), and includes transceiver means which are used to wirelessly connect, via radio-frequency channels (4), each communication centre to at least one access element (5) in which the user presents the access certificate (6).

## Description

### FIELD OF THE INVENTION

The present invention relates to an access control system for a facility or building, of the electronic and programmable kind, which is managed by a computer program and compatible with various types of user identification means, as well as the different technologies currently used in this respect.

### PRIORART

A programmable electronic access control system generally comprises a central control unit provided with a software application which, as a whole, manages the control of the facility in accordance with a lockdown plan of the facility in which are defined the users, access routes and times at which all or only some of the potential users can access through the same, as well as the access elements (locks, wall readers, etc.) associated with these access routes and the different certificates (key, card, etc.) which the users must present to the access elements in order to authorize their entry/exit should they be recognized as such within the lockdown plan. In addition these access control systems must generally meet two basic requirements: first, guaranteeing the security of the information managed; second, ensuring the reliable operation of the access elements so that errors do not occur when allowing or denying passage in respect of the users, passages and times set out in the lockdown plan of the facility. The system must of course be managed easily and quickly for user-friendliness and management efficiency.

In this context systems are known in which there is no communication enabling the direct transfer of information between the central control unit and the access element.

This type of system is referred to as 'offline' and requires the provision of a portable programming unit in order to configure each of the access elements in accordance with what is set out in the lockdown plan which is managed by the central access control unit. This type of system implies having to go round the whole facility, first in order to program the access elements one by one, and then to take from these the data relating to the events which have occurred in respect of each of them; this means a great inconvenience, especially when dealing with large facilities, for example, with hundreds of room each equipped with an access element.

In order to avoid this inconvenience, 'Update on Card' or UoC systems have been developed which are based on loading a user certificate with the information necessary from the lockdown plan set out in the central control unit and, by means of this certificate, transferring the information to the access element, a process which is bidirectional, since the certificate can also receive and store data from the access element to deliver it to the central control unit, which will process it according to what is set out in the lockdown plan; all this requires the assistance of an intermediate unit, referred to as an updater, which enables the exchange of information between the central control unit and the access element through the user certificate.

The advantage of this solution is that the system information is updated with the operation performed by each user, without the need to go to each of the access elements one by one with the portable programming unit. Its limitation is that the update of information is now tied to manual operation by the user through his certificate.

### DESCRIPTION OF THE INVENTION AND ITS ADVANTAGES

The access control system proposed here is designed using technological advances applicable in multiple fields as work tools and which until now have not been incorporated in the field of the present invention.

Such is the case of 'wireless' radio frequency communication, a name used internationally and which is also familiar in Spain. In this specialty very high security levels are nowadays reached in information transfer, and with energy consumption levels low enough to make its application thoroughly viable in an access control system in which the access elements are autonomous, that is to say, powered by batteries, so that there is no need for any cable of any type between these and the central control unit.

Based on these advanced properties of wireless radio frequency communication, the access control system proposed herein consists in that it has at least one communication centre or node which is connected to the central control unit through a standard industrial communication network and includes transceiver means which are used to wirelessly connect, via radio frequency channels, each communication centre to at least one access element in which the user presents the access certificate; according to this concept, each central control unit can be connected to various communication nodes at one time, through a standard industrial communication network; each communication node can also be simultaneously and wirelessly connected to various access elements.

In accordance with the foregoing the present invention can constitute an access control network integrated by a central control unit which is interconnected with various communication nodes each of which is interconnected in its turn with various access elements. Another characteristic of the invention is that the transmission of information between the central control unit and the access elements is bidirectional and instantaneous.

Another characteristic of the invention is that the access elements are autonomous as regards the actual management of the access assigned to each one.

Another characteristic of the invention is that the access elements are provided with an autonomous power supply in the form of batteries, while radio frequency transmission means use modern techniques of very low consumption.

The access control system recommended here involves the development of suitable communication interfaces and the adaptation of communication management, achieving a wireless transfer of information from the central control unit to the access element, and vice versa, so that both the transfer and the storage of the information benefit from total security and reliability. The main contribution of the access control system proposed herein resides in that, in order to update the information from the lockdown plan, it requires neither a portable programmer nor the management of user certificates.

The central control unit and the access elements are now in permanent communication and any lockdown plan in the central control unit is transferred at the same time to each and every access element of the access control system; in the same manner, any event that may occur in the access elements is automatically known by the central control unit without the need for any operation from the user or the lockdown plan manager.

On the other hand, this system represents a technological advance in respect of other access control systems of previous generations and is perfectly compatible with these, to the extent that in the same lockdown plan for a given facility access elements belonging to said different generations can coexist.

The access element is autonomous in managing the access control, so that if the wireless communication with the central control unit fails the access element remains enabled and in operation.

In addition there are no peripheral elements requiring manual input, such as a portable programmer, since the management of the information between the central control unit and the access elements is entirely performed wirelessly. The control circuit of the certificate reader is located in the access element and preferably in the shield means located on the inside of the door.

The wireless intercommunication control module is found in the access element, preferably in the shield means located on the inside of the door. Both controls (certificate reader and wireless intercommunication control) are preferably located superimposed inside a shield means, the superimposition enabling them to be included in its reduced dimensions (< 52 mm).

In short, the access control system proposed herein is a wireless technology application arranged to manage the complexity of an integral access control.

### DRAWINGS AND REFERENCES

In order to provide a better understanding of the nature of the present invention, the attached drawing represents an industrial embodiment by way of illustration, which is not limitative.

Figure 1 is a schematic representation of the access control system according to the invention.

In this figure the following references are shown:
1. Communication centre or node
2. Central control unit
3. Standard industrial communication network
4. Radio frequency channel
5. Access element
   5a. Card (6) reader control module located inside the access element
   5b. Wireless intercommunication control module (inside the access element)
6. User certificate

### DESCRIPTION OF A PREFERRED EMBODIMENT

In relation to the above-mentioned graphical representation and references, a preferred embodiment of the object of the invention is illustrated in the attached drawings concerning a programmable electronic access control system with 'on line' updating without cables, which, as shown in Figure 1, consists in that it has at least one communication centre or node (1), which is connected to the central control unit (2) via a standard industrial communication network (3) and includes transceiver means which are used to wirelessly connect, via radio frequency channels (4), each communication centre to at least one access element (5) in which the user presents the access certificate (6).

According to the present invention, each central control unit (2) can be connected at the same time to various communication nodes (1), via a standard industrial communication network (3), and, in turn, each communication node can be simultaneously and wirelessly connected to various access elements (5); all this so that the access control system proposed herein can form an access control network integrated by a central control unit (2) which is interconnected with various communication nodes (1) each of which is in turn interconnected with various access elements (5).

In the present invention, the transmission of information between the central control unit (2) and the access elements (5) is bidirectional and instantaneous.

One characteristic of the access elements (5) according to the invention is their autonomy as regards the actual management of the access assigned to each one, to which end these access elements (5) have an autonomous power supply via batteries, while the radio frequency transmission means use modern techniques of very low consumption; the functional autonomy means that if the wireless communication with the central control unit (2) fails, the access element (5) remains enabled and in operation.

This structure is that shown in the graphic of Figure 1, wherein is represented a central control unit (2) which, via a standard industrial communication network (TCP/IP) (3), is connected to a communication centre or node (1) the main role of which is to establish the information transmission link with the access elements (5), by means of two-way (bidirectional) communication via radio frequency channels (4) so that the communication centre (1), on the one hand, receives from the central control unit (2) information duly encoded (encrypted) to ensure its security and privacy, converting it into a supported radio frequency protocol in order to send it to each and every access element (5) depending on this communication centre (1), and, on the other hand, said communication centre (1) receives the information coming from the access elements (5) in radio frequency protocol and carries out the reverse conversion in order to send it to the central control unit (2), transferring it in the form of UDP (User Datagram Protocol) packets or datagrams. Although for reasons of simplicity the diagram of Figure 1 only shows one communication centre (1), as has been said it is possible to associate several communication centres (1) to a single central control unit (2), in the same way that (as can be seen in Figure 1) various access elements (5) are associated to a single communication centre (1), which means working with a large radio frequency range; the result of this star-like functional dependency is the determination of an access control network for a particular facility.

The access elements (5) include a radio frequency transceiver device which enables a very low consumption active listening protocol, facilitating their functional autonomy and ensuring the security of the information sent via the encoding of said information packets.

For its part the communication centre (1) is responsible for carrying out effective management in the form of active listening, in order to receive and suitably arrange the information coming from the various access elements (5) and to forward it to the central control unit (2), while managing the dispatch of information to the different access elements (5) from the central control unit (2) and ensuring the synchronisation and the proper reception of the information packets.

The access element (5) is autonomous in managing the access control, so that if the wireless communication with the central control unit (2) fails, the access element (5) remains enabled and in operation.

There are no peripheral elements requiring manual input, such as a portable programmer, since the information between the central control unit (2) and the access elements (5) is entirely managed in a wireless manner.

In addition, the certificate (6) reader control circuit (5a) is located in the access element (5) and preferably in the shield means located on the inside of the door.

The wireless intercommunication control module (5b) is located in the access element (5) preferably in the shield means located on the inside of the door. Both controls (certificate reader- 5a - and wireless intercommunication control - 5b) are preferably located superimposed within the shield means, the superimposition enabling them to be included in its reduced dimensions (< 52 mm).

## Claims

1. Programmable electronic access control system with 'on-line' updating without cables, **characterized in that** it has at least one communication centre or node (1) which is connected to the central control unit (2) via a standard industrial communication network (3) and includes transceiver means which are used to wirelessly connect, via radio frequency channels (4), each communication centre to at least one access element (5) in which the user presents the access certificate (6).

2. Programmable electronic access control system with 'on-line' updating without cables according to claim 1, **characterized in that** each central control unit (2) can be connected to various communication nodes (1) at the same time via a standard industrial communication network (3).

3. Programmable electronic access control system with 'on-line' updating without cables according to the preceding claims, **characterized in that** each communication node can be simultaneously and wirelessly connected to various access elements (5).

4. Programmable electronic access control system with 'on-line' updating without cables according to the preceding claims, **characterized in that** it can form an access control network integrated by a central control unit (2) which is interconnected with various communication nodes (1) each of which is in turn interconnected with various access elements (5).

5. Programmable electronic access control system with 'on-line' updating without cables according to the preceding claims, **characterized in that** the transmission of information between the central control unit (2) and the access elements (5) is bidirectional and instantaneous.

6. Programmable electronic access control system with 'on-line' updating without cables according to the preceding claims, **characterized in that** the access elements (5) are autonomous as regards the actual management of the access assigned to each one.

7. Programmable electronic access control system with 'on-line' updating without cables according to the preceding claims, **characterized in that** the access elements (5) have an autonomous power supply via batteries, while the radio frequency transmission means use modern techniques of very low consumption.

8. Programmable electronic access control system with 'on-line' updating without cables, **characterized in that** the access element (5) is autonomous in managing the access control, so that if the wireless communication with the central control unit (2) fails the access element (5) remains enabled and in operation.

9. Programmable electronic access control system with 'on-line' updating without cables, **characterized in** the absence of peripheral elements requiring manual input, such as a portable programmer, since the management of information between the central control unit (2) and the access elements (5) is entirely carried out wirelessly.

10. Programmable electronic access control system with 'on-line' updating without cables according to the preceding claims, **characterized in that** the certificate (6) reader control circuit (5a) is located in the access element (5) and preferably in the shield means located on the inside of the door.

11. Programmable electronic access control system with 'on-line' updating without cables according to the preceding claims, **characterized in that** the wireless intercommunication control module (5b) is located in the access element (5) preferably in the shield means located on the inside of the door.

12. Programmable electronic access control system with 'on-line' updating without cables according to the preceding claims, **characterized in that** both controls (certificate reader - 5a - and wireless intercommunication control - 5b) are preferably located superimposed within a shield means, the superimposition enabling them to be included in its reduced dimensions (< 52 mm).
